# EUROPÄISCHE PATENTANMELDUNG

(11) **EP 0 973 281 A1**
(43) Veröffentlichungstag der Anmeldung: **19.01.2000**
(21) Anmeldenummer: 98113419.0
(22) Anmeldetag: 17.07.1998
(51) Int. Cl.: H04B 15/02, H02M 1/12

(54) **Netzfilter und Anschlusskasten mit Netzfilter**

(71) Anmelder: Electro-Terminal GmbH, 6022 Innsbruck (AT)
(72) Erfinder: Abenthung, Johannes, 6022 Innsbruck (AT); Fehle, Gerhard, 6022 Innsbruck (AT)
(74) Vertreter: Schmidt-Evers, Jürgen, Dipl.-Ing.

(57) **Zusammenfassung**

Die vorliegende Erfindung stellt ein Netzfilter sowie einen Anschlußkasten zum elektrischen Anschluß von Elektrogeräten an eine Netzspannung vor. Der Anschlußkasten 100 weist dabei ein Isolierstoffteil 15 mit einem Eingang 16 zur Aufnahme des Netzkabels 17 sowie einen Ausgang 18 zum Anschluß von Bauteilen des Elektrogeräts auf. In dem Isolierstoffteil 15 ist ein Netzfilter 1 aufgenommen, wobei das Netzfilter eingangsseitige Anschlüsse 3, 4, 5, 6 zum Anschluß von Adern 19, 20, 21 des Netzkabels und ausgangsseitige Anschlüsse 7, 8, 9 aufweist, die Teil des Ausgangs 18 sind. Die eingangsseitigen Anschlüsse 3, 4, 5, 6 des Netzfilters 1 sind dabei so angeordnet, daß in dem an eine Gehäusewand 13 des Elektrogeräts angebrachten Zustand des Verbinders 100 außerhalb des Elektrogeräts liegen und die ausgangsseitigen Anschlüsse 7, 8, 9 so angeordnet sind, daß sie in dem an eine Gehäusewand des Elektrogeräts angebrachten Zustand des Verbinders 100 in das Innere des Gehäuses des Elektrogeräts weisen. Insbesondere können die eingangsseitigen Anschlüsse des Netzfilters 1 auf einer ersten Fläche 11 des Gehäuses 2 des Netzfilters angebracht sein, die zu der zweiten Fläche 12 im wesentlichen senkrecht ist, an der die ausgangsseitigen Anschlüsse 7, 8, 9 angeordnet sind. Da also erfindungsgemäß das Netzfilter 1 für die elektrische Durchführung durch eine Ausnehmung 25 einer Gehäusewand 13 eines Elektrogeräts sorgt, können eine Vielzahl von Schraubverbindungen und Kabeln entfallen.

## Beschreibung

Die vorliegende Erfindung bezieht sich auf ein Netzfilter für Elektrogeräte sowie auf einen Anschlußkasten zum elektrischen Anschluß eines Elektrogeräts an eine Netzspannungsversorgung, der einen integrierten Netzfilter aufweist.

Hochfrequente elektromagnetische Schwingungen, die z. B. in Spannungen mit steilen Spannungsanstiegen enthalten sind, können eine Signalübertragung stören. Derartige Schwingungen werden beispielsweise unbeabsichtigt durch Motoren mit Kohlebürsten, Schalter und Thyristoren hervorgerufen. Störquellen sind also beispielsweise elektrische Betriebsmittel zum Schalten von Spannungen sowie Betriebsmittel zum Erzeugen hochfrequenter Spannungen. Zur Entstörung werden Netzfilter verwendet, die allgemein mehrere Tiefpässe aufweisen und dicht am störenden Betriebsmittel angeschlossen werden.

Die vorliegende Erfindung bezieht sich insbesondere auf Netzfilter sowie einen Anschlußkasten mit einem Netzfilter, die zur Anbringung an eine Gehäusewand eines elektrischen Geräts, wie beispielsweise einem Haushaltsgerät, wie einer Waschmaschine, einer Spülmaschine, einem Trockner oder dergleichen dienen.

Gemäß dem Stand der Technik ist in dieser Gehäusewand des anzuschließenden elektrischen Geräts eine Ausnehmung vorgesehen. Ein Netzkabel zum Anschluß des elektrischen Geräts an eine Netzspannungsversorgung wird von außen an das Gehäuse des Elektrogeräts herangeführt. Gemäß dem Stand der Technik ist außen an der Gehäusewand eine Anschlußdose vorgesehen, in der die einzelnen Adern des Netzkabels über Schraubverbindungen mit Kontakten verbunden werden, die wiederum als Steckverbindungen in das Innere des Gehäuses des Elektrogeräts ragen. Im Bereich des Eingangs der außenliegenden Anschlußdose ist üblicherweise eine Zugentlastung für das Netzkabel vorgesehen. Das Netzfilter gemäß dem Stand der Technik ist wie bereits ausgeführt im Inneren des Gehäuses des Elektrogeräts angeordnet und mittels Leitungen an die in das Innere des Elektrogeräts ragenden Steckkontakte angeschlossen.

Diese Anordnung weist indessen mehrere Nachteile auf. Zum einen ist das Verbinden durch Schraubverbindungen der einzelnen Adern des Netzkabels im Inneren der Anschlußdose eine mühevolle und nur schwer automatisierbare Tätigkeit, die aufgrund des Arbeitsaufwands und der Materialkosten übermäßig hohe Kosten verursacht. Weiterhin ist bei der bekannten Vorrichtung nachteilig, daß im Zuge der Anbringung der Anschlußdose an die Gehäusewand des Elektrogeräts im Zuge der Endfertigung des Elektrogeräts erst die Anschlußdose außen auf der Gehäusewand angebracht werden muß und dann in einem zusätzlichen Arbeitsschritt das Netzfilter innen verbunden werden muß. Darüber hinaus stellen auch die Kabelverbindungen von den Netzfiltern zu den Steckkontakten der Anschlußdose eine Quelle zusätzlicher Kosten und Arbeit dar.

Es ist daher Aufgabe der vorliegenden Erfindung, ein Netzfilter für Elektrogeräte sowie einen Anschlußkasten zum elektrischen Anschluß eines Elektrogeräts an eine Netzspannungsversorgung mit einem Netzfilter vorzusehen, die einen elektrischen Anschluß eine Elektrogeräts an eine Netzspannungsversorgung ermöglichen, der unter dem Gesichtspunkt der dazu notwendigen Arbeitsschritte sowie der Materialkosten als günstig einzustufen ist.

Insbesondere soll dabei die Zahl der notwendigen Schraubverbindungen/-kontakte zur Material- und Arbeitskostenersparnis verringert werden.

Weiterhin soll der Anschlußkasten mit dem Netzfilter in einem Arbeitsschritt an einer Wand des Gehäuses eines Elektrogeräts montierbar sein.

Die Aufgabe wird erfindungsgemäß durch die Merkmale der unabhängigen Ansprüche gelöst. Die abhängigen Ansprüche bilden den zentralen Gedanken der Erfindung in besonders vorteilhafter Weise weiter.

Erfindungsgemäß ist also ein Netzfilter für Elektrogeräte vorgesehen, das insbesondere hinsichtlich seiner äußeren Konfiguration (Gehäuse, Anordnung der Anschlüsse) so ausgebildet ist, daß die oben genannte Aufgabe gelöst wird und die entsprechenden Vorteile erzielt werden.

Das Netzfilter weist dabei ein Gehäuse auf, das wenigstens zwei im wesentlichen zu einander senkrechte Flächen aufweist. dies ist bspw. der Fall, wenn das Gehäuse quaderförmig ist. Das Netzfilter weist weiterhin mehrere eingangsseitige Anschlüsse sowie mehrere ausgangsseitige Anschlüsse auf. Eine interne Filterschaltung verbindet die eingangsseitigen Anschlüsse mit den ausgangsseitigen Anschlüssen. Als interne Filterschaltung kommt dabei jede aus dem Stand der Technik bekannte Filterschaltung gemäß der vorliegenden Erfindung in Betracht, es können also beispielsweise kapazitive oder kombiniert kapazitiv-induktive Filterschaltungen im Zuge der Anwendung der vorliegenden Erfindung verwendet werden. Die eingangsseitigen Anschlüsse sind dabei auf einer ersten Fläche des Gehäuses angebracht, die zu der zweiten Fläche, an der die ausgangsseitigen Anschlüsse angeordnet sind, im wesentlichen senkrecht ist. Mit anderen Worten, die Kontaktierrichtung der eingangsseitigen Anschlüsse bildet im wesentlichen einen rechten Winkel zu der Kontaktierrichtung der ausgangsseitigen Anschlüsse.

Dadurch, daß die eingangsseitigen Anschlüsse auf einer ersten Fläche des Gehäuses angebracht sind, die im wesentlichen senkrecht zu der zweiten Fläche ist, in der die ausgangsseitigen Anschlüsse des Netzfilters angeordnet sind, kann das Netzfilter selbst für eine elektrische Durchführung durch die Gehäusewand eines Elektrogeräts dienen. Eingangsseitig können nämlich die Adern des Netzkabels angeschlossen werden, und ausgangsseitig stehen automatisch dann die Anschlüsse für die Bauteile des Elektrogeräts im Inneren des Gehäuses des Elektrogeräts zur Verfügung. Somit können nahezu sämtliche Schraubverbindungen entfallen.

Die eingangsseitigen Anschlüsse können insbesondere einen im wesentlichen senkrechten Winkel mit den ausgangsseitigen Anschlüssen bilden.

Die eingangsseitigen Anschlüsse können wenigstens einen Erdungsanschluß zur Verbindung mit einem Metallteil, wie beispielsweise einer Gehäusewand, eines Elektrogeräts aufweisen. Der Erdungsanschluß kann dabei für eine Verbindung durch Verschraubung oder durch eine Klemmverbindung angepaßt sein.

Wenigstens ein Erdungsanschluß kann eine Einpreßzunge zum Einpressen in einen Schlitz eines Metallteils aufweisen, wobei die Einpreßzunge wenigstens eine Rastnase aufweisen kann.

Der wenigstens eine Erdungsanschluß kann im wesentlichen parallel zu der zweiten Fläche angeordnet sein.

Der wenigstens eine Erdungsanschluß kann im wesentlichen eine Verlängerung der zweiten Fläche bilden. Wenn somit das Netzfilter bündig auf eine Gehäusewand eines Elektrogeräts angebracht wird, so daß die erste Fläche des Netzfilters auf einer Fläche beispielsweise der Gehäusewand des Elektrogeräts zum Aufliegen kommt, befindet sich der wenigstens eine Erdungsanschluß des Netzfilters automatisch im wesentlichen parallel zu der Oberfläche der Gehäusewand des Elektrogeräts.

Gemäß der vorliegenden Erfindung ist weiterhin ein Anschlußkasten zum elektrischen Anschluß eines Elektrogeräts an eine Netzspannungsversorgung vorgesehen. Der Anschlußkasten weist dabei ein Isolierstoffteil mit einem Eingang zur Aufnahme eines Netzkabels auf. Weiterhin weist der Anschlußkasten einen Ausgang zum Anschluß von Bauteilen des Elektrogeräts auf, wobei dieser Ausgang in dem an eine Gehäusewand des Elektrogeräts angebrachten Zustand des Anschlußkastens innerhalb des Gehäuses des Elektrogeräts liegt. Anzuschließende Bauteile des Elektrogeräts können beispielsweise elektrische Motoren oder Steuerelemente des Elektrogeräts sein. Der Anschlußkasten weist weiterhin ein Netzfilter auf, das in dem Isolierstoffteil aufgenommen ist. Das Netzfilter weist dabei eingangsseitige Anschlüsse zum Anschluß von Adern des Netzkabels und ausgangsseitige Anschlüsse auf, die Teil des Ausgangs sind, der in dem außen bzw. innen an eine Gehäusewand des Elektrogeräts angebrachten Zustand des Anschlußkastens innerhalb bzw. außerhalb des Gehäuses des Elektrogeräts liegt.

Der Anschlußkasten kann somit als eine Einheit außen oder innen an der Gehäusewand eines Elektrogeräts angebracht werden, wobei jeweils die leitfähigen Bestandteile des Netzfilters für die eigentliche Durchführung durch die Gehäusewand des Elektrogeräts sorgen. Die übrigen Bauteile des Anschlußkastens können somit metallfrei ausgeführt sein und beispielsweise rein aus Kunststoffmaterialien bestehen.

Der Anschlußkasten kann insbesondere ein Netzfilter aufweisen, wie es oben beschrieben wurde. Alternativ können die ausgangsseitigen und eingangsseitigen Anschlüsse des Netzfilters beispielsweise auch an jeweils gegenüberliegenden Flächen des Gehäuses des Netzfilters vorgesehen sein. Die oben ausgeführte Konfiguration ist indessen besonders vorteilhaft für eine elektrische Durchführung mittels des Netzfilters.

Das Netzfilter kann eine Einpreßzunge zum Einpressen in einen Schlitz in der Gehäusewand eines Elektrogeräts aufweisen.

Im Bereich des Eingangs des Anschlußkastens kann eine Zugentlastung für das Netzkabel vorgesehen sein.

Die Zugentlastung kann das Netzkabel durch einen schraubenlosen Klemmverbinder halten. In diesem Fall ist es erfindungsgemäß möglich, einen Anschlußkasten herzustellen, der keinerlei Schraubverbindung aufweist.

Die Zugentlastung kann zusammen mit dem Netzfilter in dem Isolierstoffteil untergebracht sein. Gegenüber dem Stand der Technik wird dadurch der Vorteil geschaffen, daß das Netzkabel, die Zugentlastung und das Netzfilter zusammen mit dem Isolierstoffteil als eine Einheit an dem Gehäuse des Elektrogeräts angebracht werden können. Nach der Anbringung dieser Einheit sind im Gegensatz zum Stand der Technik keinerlei weitere Arbeitsschritte mehr erforderlich, um für den elektrischen Anschluß des Elektrogeräts zu sorgen.

Die eingangsseitigen Anschlüsse des Netzfilters zum Anschluß der Adern des Netzkabels können Klemmverbinder sein, was zu einer weiteren Reduzierung der Anzahl von Schraubverbindungen in dem Anschlußkasten sorgt.

Das Isolierstoffteil kann völlig metallfrei sein, da die eigentliche Aufteilung der verschiedenen Anschlüsse und die eigentliche elektrische Verbindung sowie die Durchführung durch die Gehäusewand des Elektrogeräts durch das Netzfilter erfolgt.

Der Anschlußkasten kann somit auch völlig frei von Schraubverbindungen sein.

Weitere Merkmale, Vorteile und Eigenschaften der vorliegenden Erfindung werden nunmehr anhand von Ausführungsbeispielen und bezugnehmend auf die Begleitfiguren der anliegenden Zeichnungen näher erläutert. Es zeigen:
Figur 1 eine seitliche Schnittansicht eines Verbinders zum elektrischen Anschluß eines Elektrogeräts an eine Netzspannungsversorgung gemäß der vorliegenden Erfindung in dem an eine Gehäusewand des Elektrogeräts angebrachten Zustand des Verbinders,
Figur 2 zeigt eine Aufsicht eines erfindungsgemäßen Verbinders,
Figur 3 zeigt die äußere Konfiguration eines erfindungsgemäßen Netzfilters,
Figur 4 zeigt in einer Schnittansicht insbesondere im Detail die Metallkomponenten des in Figur 3 dargestellten Netzfilters,
Figur 5A zeigt schematisch ein Beispiel einer Filterschaltung für ein rein kapazitives Netzfilter,
Figur 5B zeigt schematisch ein Beispiel einer Filterschaltung für ein Netzfilter mit einem induktiven Anteil, und
Figur 6 zeigt einen Erdungsanschluß eines Netzfilters zur schraubenlosen Verbindung mit einem Metallteil (Gehäusewand eines Elektrogeräts).

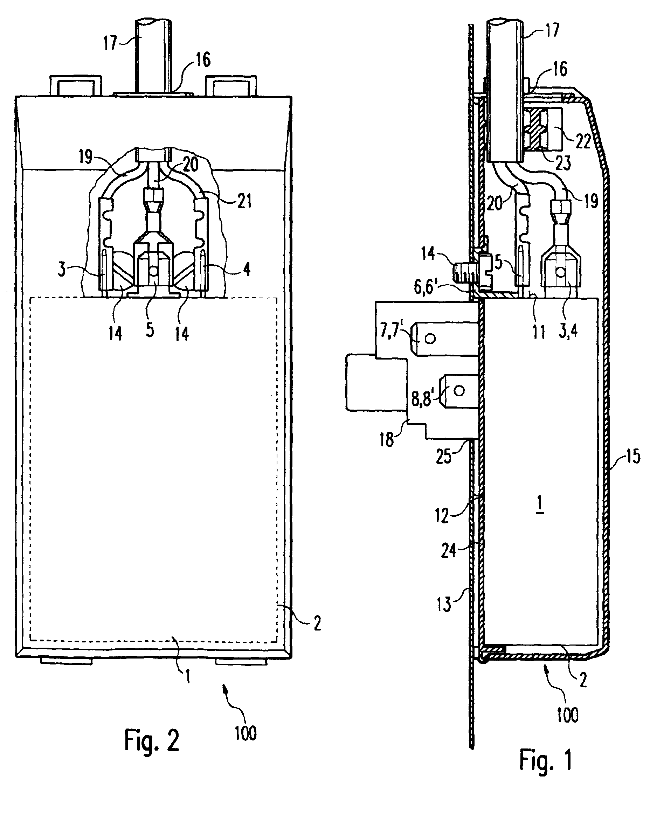

Bezugnehmend auf Figur 1 und 2 soll zuerst ein Anschlußkasten 100 gemäß der vorliegenden Erfindung beschrieben werden.

In Figur 1 ist der Anschlußkasten 100 in dem Zustand gezeigt, in dem er auf eine Gehäusewand 13 eines nicht weiter dargestellten Elektrogeräts aufgebracht ist. In dem in Figur 1 dargestellten Ausführungsbeispiel ist der erfindungsgemäße Anschlußkasten 100 außen auf eine Gehäusewand 13 eines Elektrogeräts aufgebracht. Gemäß der vorliegenden Erfindung ist es selbstverständlich auch möglich, die gesamte Einheit des Verbinders 100 innen an der Gehäusewand anzubringen, wobei in diesem Fall lediglich die Anschlüsse des Netzfilters 1 invertiert werden müssen.

Einer der Hauptbestandteile des erfindungsgemäßen Verbinders 100 ist ein gehäuseartiges Isolierstoffteil 15, das beispielsweise aus Kunststoff gefertigt werden kann und mit sämtlichen in ihm aufgenommenen Bauteilen, die später erläutert werden sollen, an der Gehäusewand 13 des Elektrogeräts als eine Einheit angebracht werden kann. Wie aus dem Stand der Technik bekannt, kann das Isolierstoffteil 1 von außen klappenartig geöffnet werden, um beispielsweise Bauteile im Inneren des Isolierstoffteils 15 zu überprüfen oder auszuwechseln.

Das Isolierstoffteil 1 weist einen Eingang 16 in Form einer Öffnung auf, in die ein Netzkabel 17 eingeführt werden kann. Unmittelbar hinter dem Eingang 16 ist im Inneren des Isolierstoffteils 15 eine Zugentlastung 22 vorgesehen, die gemäß der vorliegenden Erfindung schraubenlos in Form einer Klemmverbindung 23 ausgebildet sein kann, in der Art, wie sie beispielsweise von Kabelbindern bekannt ist. Diese Zugentlastung 22 kann daher vollständig metallfrei ausgeführt werden.

Nach der Zugentlastung 22 werden die einzelnen Adern 19, 20, 21 des Netzkabels 17 getrennt mittels Steck-, Klemm- oder Quetschverbindungen eingangsseitigen Anschlüssen 3, 4, 5 eines Netzfilters 1 zugeführt, das ebenfalls in dem Inneren des Isolierstoffteils 15 aufgenommen ist. Eingangsseitig weist das Netzfilter 1 neben den Anschlüssen 3, 4, 5 zum Anschluß des Netzkabels 17 Erdungsanschlüsse 6, 6 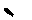 auf, die entweder wie dargestellt mit einer Schraubverbindung 14 oder aber auch durch Quetsch- oder Klemmverbindungen mit der Gehäusewand 13 des Elektrogeräts verbunden werden können. Das Netzfilter ist wie aus der Figur ersichtlich im wesentlichen quaderförmig, wobei eine Fläche 12 des Netzfilters 1 plan auf einer Wand 24 des Isolierstoffteils 15 aufliegt und die Wand 24 des Isolierstoffteils 15 im eingebauten Zustand des Verbinders 100 wiederum plan auf der Gehäusewand 13 des Elektrogeräts aufliegt.

Der Ausgang 18 des Netzfilters ist so gestaltet, daß er in dem auf die Gehäusewand 13 aufgesetzten Zustand des Verbinders 100 durch eine beispielsweise kreisförmige Ausnehmung 25 in der Wand 13 des Gehäuses des Elektrogeräts hindurchragt. Für den Fall, daß der Anschlußkasten 100 wie in Figur 1 dargestellt außen auf die Gehäusewand 13 des Elektrogeräts aufgebracht wird, ragt also der Ausgang 18 des Netzfilters 1 durch die Ausnehmung 25 in der Gehäusewand des Elektrogeräts in das Innere des Gehäuses des Elektrogeräts hinein. Der Ausgang 18 des Netzfilters 1 kann dabei wie dargestellt steckerartig mit Steckverbindungen 7, 7 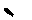 , 8, 8 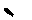 und 9, 9 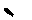 ausgebildet sein.

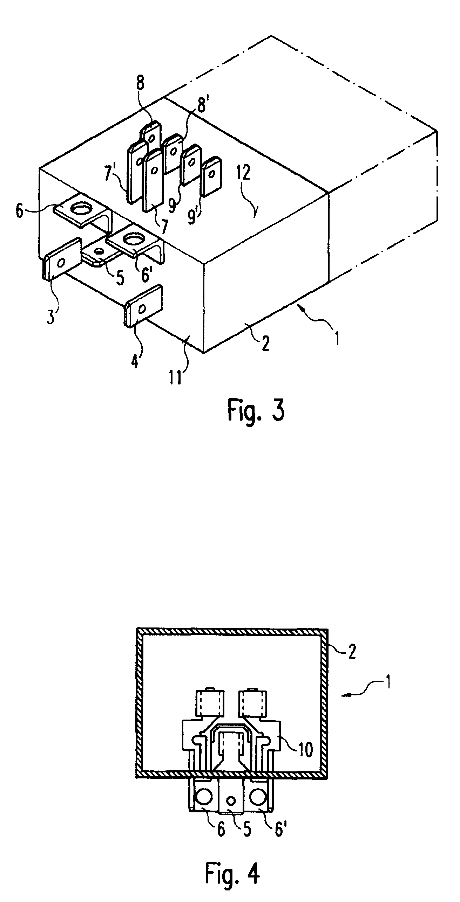

Für die Erdung, die Phase sowie den Nulleiter sind wie besser aus Figur 3 ersichtlich am Ausgang 18 des Netzfilters 1, der in das Innere des Elektrogeräts ragt, jeweils zwei Steck/Klemm/Quetschverbinder 7, 7 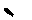 , 8, 8 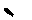 bzw. 9, 9 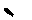 vorgesehen, so daß leicht die mehreren elektrisch zu versorgenden Bauteile des Elektrogeräts, wie beispielsweise Motoren, Pumpen, Steuergeräte oder Timer versorgt werden können.

Wie aus Figuren 1 und 2 ersichtlich sorgt also das Netzfilter 1 im Inneren des Verbinders 100 selbst für die Durchführung der elektrischen Versorgung durch die Ausnehmung 25 der Gehäusewand 13 des Elektrogeräts hindurch. Somit können beispielsweise die Leitungen zum Anschluß des Netzfilters, wie sie bei dem Stand der Technik erforderlich sind, entfallen. Für den Fall, daß die Erdungsanschlüsse 6, 6 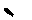 des Netzfilters 1 schraubenlos, d.h. beispielsweise durch Quetsch- oder Klemmverbindungen mit einem Metallteil wie beispielsweise der Gehäusewand 13 des Elektrogeräts verbunden werden, weist der gesamte Anschlußkasten 100 samt darin befindlicher Bauelemente keine einzige Schraubverbindung auf, da, wie bereits oben ausgeführt, auch die Zugentlastung 23 durch eine von Kabelverbindern her bekannte Rast/Klemmverbindung 22 erfolgen kann. Da das Netzfilter 1 für die eigentliche elektrische Durchführung sorgt, können darüber hinaus im Gegensatz zum Stand der Technik die übrigen Bestandteile des Verbinders 100 metallfrei, d.h. bspw. aus Kunststoffmaterialien gefertigt werden.

Wie in Fig. 1 dargestellt können die Erdungsanschlüsse 6, 6' in Form eines flachen U gebildet sein, wobei die Schenkel des U so angeordnet sind, daß sie von der Gehäusewand 13 wegragen. somit kann die U-form der Erdungsanschlüsse 6, 6' durch Formschluß mit der Wand des Isolierstoffteils 15 und/oder der Ausnehmung 25 der Gehäusewand für eine Lagepositionierung und -fixierung der Erdungsaschlüsse 6, 6' und somit des Netzfilters 1 und des gesamten Anschlußkastens 100 sorgen.

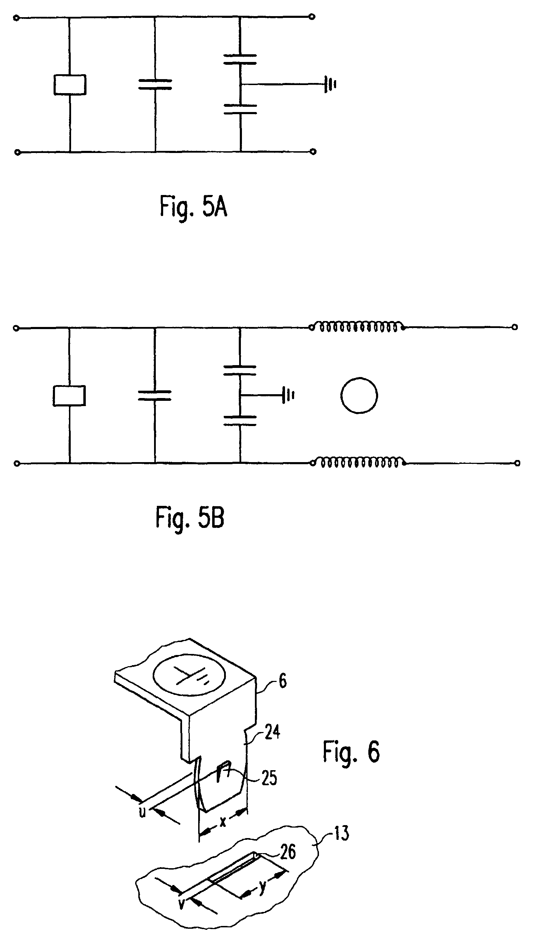

Fig. 6 zeigt detailliert einen Erdungsanschluß 6, der für eine schraubenlose Verbindung mit einem Metallteil wie beispielsweise der Gehäusewand 13 eines Elektrogeräts ausgelegt ist. Dazu weist der Erdungsanschluß 6 eine Einpreßzunge 24 mit einer Rastnase 25 auf. Die Gehäusewand 13 ist entsprechend mit einem Schlitz 26 versehen. Dadurch kann ein Einpreßkontakt realisiert werden. Die Dicke u der Einpreßzunge 24 kann dazu beispielsweise etwa 0,5 mm größer sein als die Breite v des Schlitz 26. Die Länge x der Einpreßzunge 24 kann beispielsweise etwa 0,7 mm größer sein als die Länge des Schlitzes 26. Die Außenabmessungen u, x der Einpreßzunge 24 sind also etwas größer als die Abmessungen des Schlitzes 26.

Um ein unbeabsichtigtes Herausreißen der Einpreßzunge 24 aus dem Schlitz 26 zu vermeiden, weist die Einpreßzunge 24 wenigstens eine Rastnase 25 auf, die ausgestanzt oder ausgebogen ist. Somit werden die Gehäusewand 13 und der Erdungsanschluß 6 mechanisch miteinander verbunden und der elektrische Kontakt durch den Einpreßkontakt gewährleistet.

Bezugnehmend auf Figuren 3 und 4 soll nunmehr im Detail insbesondere die äußere Konfiguration des Netzfilters 1 mit der vorliegenden Erfindung näher beschrieben werden. Wie bereits oben ausgeführt, weist das Netzfilter 1 beispielsweise eine im wesentlichen quaderförmige äußere Form auf. Von Bedeutung sind insbesondere eine erste Fläche 11 sowie eine zweite Fläche 12 des Netzfilters 1, die zueinander im wesentlichen einen rechten Winkel bilden. Erfindungsgemäß sind die eingangsseitigen Anschlüsse 3, 4, 5, 6 des Netzfilters 1 an der ersten Fläche 11 angebracht. Die ausgangsseitigen Anschlüsse 7, 7 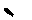 , 8, 8 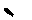 und 9, 9 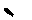 des Netzfilters 1 sind auf der zweiten, zu der ersten Fläche senkrechten Fläche 12 angebracht. Die Anschlüsse 3, 4, 5, 6, 7, 7', 8, 8', 9, 9' stehen dabei jeweils im wesentlichen im rechten Winkel von den jeweiligen Flächen 11 bzw. 12 weg, so daß die eingangsseitigen Anschlüsse 3, 4, 5, 6 des Netzfilters 1 im wesentlichen einen rechten Winkel zu der Hauptachse der ausgangsseitigen Anschlüsse 6, 6', 7, 7', 8, 8', 9, 9' bilden. Eine solche rechtwinklige Anordnung der Anschlüsse ist besonders vorteilhaft für eine bezugnehmend auf Figuren 1 und 2 dargestellten Anschlußkasten, bei dem das Netzfilter für die eigentliche elektrische Durchführung durch die Gehäusewand eines Elektrogeräts sorgt. Die Anschlüsse des Netzfilters, die bei der Montage eines solchen Filters außerhalb des Gehäuses des Elektrogeräts liegen, erstrecken sich dann nämlich parallel zur Gehäusewand, was u.a. für eine wirksame Zugentlastung von Vorteil ist. Die Anschlüsse des Netzfilters, die in das Innere des Elektrogeräts ragen, stehen dagegen in diesem Fall vorteilhafterweise in einem rechten Winkel zur Gehäusewand des Elektrogeräts, was den internen Anschluß erleichtert.

Wie in Figur 3 dargestellt weisen die eingangsseitigen Anschlüsse jeweils einen Anschlußkasten für den Nulleiter, die Phase sowie die Erdung des daran anzuschließenden Netzkabels 17 auf. Weiterhin sind auf der ersten Fläche 11 zwei Erdungsanschlüsse 6, 6 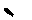 vorgesehen, die beispielsweise eine Erdung des Netzfilters 1 durch Verschrauben der Erdungsanschlüsse 6, 6 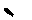 auf ein Metallteil wie beispielsweise der Gehäusewand 13 des Elektrogeräts ermöglichen. Wie in Figur 3 ersichtlich bilden die Erdungsanschlüsse 6, 6 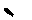 dabei im wesentlichen eine Verlängerung der zweiten Fläche 12. D. h. die Erdungsanschlüsse 6, 6 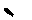 sind im wesentlichen parallel zu der zweiten Fläche 12 ausgerichtet. Wenn somit das in Figur 3 dargestellte Netzfilter 1 mit seiner zweiten Fläche 12 auf einer Gehäusewand zur Auflage gebracht wird, befinden sich die Erdungsanschlüsse 6, 6 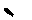 in einer zu der Gehäusewand parallelen Ausrichtung und können leicht mit dieser Gehäusewand verschraubt werden.

Die ausgangsseitigen Anschlüsse weisen je zwei Anschlüsse 7, 7 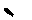 für die Erdung der anzuschließenden internen Bauelemente des Elektrogeräts, zwei Anschlüsse 8, 8 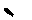 für die Phase und zwei Anschlüsse 9, 9 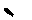 für den Nulleiter der anzuschließenden Bauteile auf. Selbstverständlich können auch mehr als jeweils zwei Anschlüsse für anzuschließende Bauteile des Elektrogeräts vorgesehen werden.

Wie in Figur 3 schematisch durch eine Strichlinierung dargestellt kann die Konfiguration der eingangsseitigen und ausgangsseitigen Anschlüsse auch dann wie in Figur 3 dargestellt beibehalten werden, wenn sich das Volumen des Netzfilters 1 aufgrund zusätzlicher oder größerer interner Bauelemente der internen Filterschaltungen vergrößern sollte. Somit kann erfindungsgemäß auch ein einziges Isolierstoffteil 15 für verschiedenartige Netzfilter insbesondere verschiedener Größe verwendet werden. Im Bereich der eingangsseitigen und ausgangsseitigen Anschlüsse des Netzfilters 1 ergibt sich nämlich bei der erfindungsgemäßen Vorrichtung keine Veränderung. Lediglich im hinteren Bereich des Isolierstoffteils 15 ist ggf. zusätzlicher Raum für weitere und größere Bauteile der Filterschaltungen des Netzfilters 1 bereitzustellen.

Figur 4 zeigt schematisch den Metallbestandteil 10 des Netzfilters 1 innerhalb des Gehäuses des Netzfilters wobei dieser Metallbestandteil unabhängig von der Art des Netzfilters 1 beibehalten werden kann. Die je nach Art der internen Filterschaltung des Netzfilters 1 notwendigen Bauelemente können je nach Bedarf in Serie oder parallel an dem Metallbestandteil angebracht werden, wobei dieser Schritt vorteilhafterweise dann erst erfolgt, wenn das Gehäuse 2 und der Metallbestandteil 10 des Netzfilters 1 unabhängig von den noch anzubringenden Bauelementen der internen Filterschaltung bereits gefertigt und miteinander verbunden sind.

In Figuren 5a und 5b sind schematisch zwei Beispiele für einen rein kapazitiven (Figur 5a) bzw. einen induktiven Netzfilter (Figur 5b) dargestellt.

Durch das erfindungsgemäße Netzfilter und den erfindungsgemäßen Anschlußkasten wird somit ein elektrischer Anschluß von Elektrogeräten ermöglicht, dessen Montage und Anbringung an der Wand 13 eines Elektrogeräts weniger Bauteile, insbesondere Kabel und Schrauben und damit einher gehend weniger Arbeitsschritte benötigt. Dabei ist zu bedenken, daß der in Figur 1 dargestellte Anschlußkasten 100 am Ende einer Montagelinie eines Elektrogeräts von außen auf das Elektrogerät aufgebracht werden kann, ohne daß ein weiterer Arbeitsschritt beispielsweise in einer internen Verbindung eines Netzfilters nötig wäre. Dabei ist zu bedenken, daß für verschiedene Länder ggf. verschiedene Netzfilter und/oder Netzkabel vorgesehen werden müssen. Diese Adaptation kann erfindungsgemäß rein im Bereich des Verbinders 100 stattfinden, Anpassungen im Bereich des Elektrogeräts selbst sind daher nicht erforderlich. Der Anschlußkasten 100 kann vielmehr modular als eine Einheit einschließlich des Netzkabels und des in dem Isolierstoffteil befindlichen Netzfilters an der Gehäusewand eines Elektrogeräts angebracht werden. Wie aus dem Stand der Technik bekannt, kann die eigentliche Verbindung zwischen dem Isolierstoffteil und der Gehäusewand dabei im Bereich der Ausnehmung 25 durch Kunststoff-Rastelemente erfolgen, die die Gehäusewand 13 des Elektrogeräts hintergreifen und einschnappen.

## Patentansprüche

1. Netzfilter für Elektrogeräte, aufweisend
- ein Gehäuse (2) mit wenigstens zwei im wesentlichen zueinander senkrechten Flächen (11, 12),
- mehrere eingangsseitige Anschlüsse (3, 4, 5, 6),
- mehrere ausgangsseitige Anschlüsse (7, 8, 9) und
- eine interne Filterschaltung (10), die die eingangsseitigen Anschlüsse (3, 4, 5, 6) mit den ausgangsseitigen Anschlüsse (7, 8, 9) verbindet,
wobei die eingangsseitigen Anschlüsse (3, 4, 5, 6) und die ausgangsseitigen Anschlüsse (7, 8, 9) so an dem Gehäuse (2) angeordnet sind, daß die Kontaktierrichtung der eingangsseitigen Anschlüsse (3, 4, 5, 6) im wesentlichen einen rechten Winkel zu der Kontaktierrichtung der ausgangsseitigen Anschlüsse (7, 8, 9) bildet.

2. Netzfilter nach Anspruch 1,
dadurch gekennzeichnet,
daß die eingangsseitigen Anschlüsse (3, 4, 5, 6) auf einer ersten Fläche (11) des Gehäuses (2) angebracht sind, die zu der zweiten Fläche (12) im wesentlichen senkrecht ist, an der die ausgangsseitigen Anschlüsse (7, 8, 9) angeordnet sind.

3. Netzfilter nach Anspruch 1 oder 2,
dadurch gekennzeichnet,
daß die eingangsseitigen Anschlüsse (3, 4, 5, 6) wenigstens einen Erdungsanschluß (6, 6 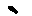 ) zur Verbindung mit einem Metallteil (13) eines Elektrogeräts aufweisen, wobei der Erdungsanschluß (6, 6 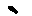 ) für eine Verbindung durch Verschraubung (14) oder durch eine Klemmverbindung angepaßt ist.

4. Netzfilter nach Anspruch 3,
dadurch gekennzeichnet,
daß der wenigstens eine Erdungssanschluß (6, 6 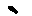 ) im wesentlichen parallel zu der zweiten Fläche (12) angeordnet ist.

5. Netzfilter nach Anspruch 3,
dadurch gekennzeichnet,
daß wenigstens ein Erdungsanschluß (6, 6') eine Einpreßzunge (24) zum Einpressen in einen Schlitz (26) eines Metallteils (13) aufweist.

6. Netzfilter nach Anspruch 5,
dadurch gekennzeichnet,
daß die Einpreßzunge (24) wenigstens eine Rastnase (25) aufweist.

7. Netzfilter nach einem der vorhergehenden Ansprüche,
dadurch gekennzeichnet,
daß der wenigstens eine Erdungssanschluß (6, 6 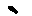 ) im wesentlichen eine Verlängerung der zweiten Fläche (12) bildet.

8. Anschlußkasten zum elektrischen Anschluß eines Elektrogeräts an eine Netzspannungsversorgung, aufweisend
- ein Isolierstoffteil (15) mit einem Eingang (16) zur Aufnahme eines Netzkabels (17),
- einen Ausgang (18) zum Anschluß von Bauteilen des Elektrogeräts, und
- ein Netzfilter (1), das in dem Isolierstoffteil (15) aufgenommen ist,
wobei das Netzfilter (1) eingangsseitige Anschlüsse (3, 4, 5, 6) zum Anschluß von Adern (19, 20, 21) des Netzkabels (17) und ausgangsseitige Anschlüsse (7, 8, 9) aufweist, die Teil des Ausgangs (18) sind, und die eingangsseitigen Anschlüsse (3, 4, 5, 6) des Netzfilters (1) so angeordnet sind, daß sie in dem an eine Gehäusewand (13) des Elektrogeräts angebrachten Zustand des Verbinders (100) außerhalb des Elektrogeräts liegen und die ausgangsseitigen Anschlüsse (7, 8, 9) so angeordnet sind, daß sie in dem außen bzw. innen an eine Gehäusewand (13) des Elektrogeräts angebrachten Zustand des Verbinders (100) in das Innere bzw. das Äußere des Gehäuses des Elektrogeräts weisen.

9. Anschlußkasten nach Anspruch 8,
dadurch gekennzeichnet,
daß er ein Netzfilter (1) nach einem der Ansprüche 1 bis 5 aufweist.

10. Anschlußkasten nach Anspruch 9,
dadurch gekennzeichnet,
daß das Netzfilter (1) eine Einpreßzunge (24) zum Einpressen in einen Schlitz (26) in der Gehäusewand (13) eines Elektrogeräts aufweist.

11. Anschlußkasten nach einem der Ansprüche 8 bis 10,
dadurch gekennzeichnet,
daß im Bereich des Eingangs (16) eine Zugentlastung (22) für das Netzkabel (17) vorgesehen ist.

12. Anschlußkasten nach Anspruch 11,
dadurch gekennzeichnet,
daß die Zugentlastung (22) das Netzkabel (17) durch einen schraubenlosen Klemmverbinder (23) hält.

13. Anschlußkasten nach einem der Ansprüche 11 oder 12,
dadurch gekennzeichnet,
daß die Zugentlastung (22) zusammen mit dem Netzfilter (1) in dem Isolierstoffteil (15) untergebracht ist.

14. Anschlußkasten nach einem der Ansprüche 8 bis 13,
dadurch gekennzeichnet,
daß die eingangsseitigen Anschlüsse des Netzfilters (1) zum Anschluß von Adern (19, 20, 21) des Netzkabels (17) Klemmverbinder (3, 4, 5) sind.

15. Anschlußkasten nach einem der Ansprüche 8 bis 14,
dadurch gekennzeichnet,
daß das Isolierstoffteil (15) metallfrei ist.

16. Anschlußkasten nach einem der Ansprüche 8 bis 15,
dadurch gekennzeichnet,
daß der Anschlußkasten (100) keinerlei Schraubverbindungen aufweist.
